# EUROPEAN PATENT APPLICATION

(11) **EP 3 840 130 A1**
(43) Date of publication of application: **23.06.2021**
(21) Application number: 19219149.2
(22) Date of filing: 20.12.2019
(51) Int. Cl.: H01R 13/24, B60L 53/16, H01R 13/631, H01R 24/38, H01R 13/62

(54) **ELECTRICAL CONNECTOR, CONNECTOR ASSEMBLY AND CHARGING ROBOT FOR A CONDUCTIVE CHARGING SYSTEM**

(71) Applicant: TE Connectivity Germany GmbH, 64625 Bensheim (DE)
(72) Inventor: KUMAR, Rajesh, 60598 Frankfurt am Main (DE); SCHAEFER, Maik, 64579 Gernsheim (DE); HAUCK, Uwe, 14532 Kleinmachnow (DE); SCHMIDT, Helge, 67346 Speyer (DE); STABROTH, Waldemar, 55278 Mommenheim (DE); ECKEL, Markus, 68642 Bürstadt (DE); OSTENDORF, Frank, 64625 Bensheim (DE); JAKOB, Alexander, 83224 Staudach-Egerndach (DE)
(74) Representative: Grünecker Patent- und Rechtsanwälte PartG mbB

(57) **Abstract**

The object of the present invention is to improve charging systems in terms of their mating process and longevity. The object is achieved by providing an electrical connector (1) configured to be mated with a mating connector (10) along a mating direction (14) and comprising at least two contact elements (3) each with a contact surface (5), wherein each contact surface (5) is at least partially inclined with respect to the mating direction (14) and wherein the at least two contact elements (3) are spaced apart from each other along a circumferential direction (12) with respect to the mating direction (14). Thereby, the inclination of the contact surfaces (5) may prevent a sliding of the contact surfaces (5) on corresponding contact surfaces (11) of the mating connector (10). Thus, the amount of wear occurring during the mating process is reduced and the necessary mating force is lowered.

## Description

### Technical Field to which the Invention relates

The present invention relates to an electrical connector and, more specifically, to an electrical connector for a charging system, in particular for a conductive charging system of an electric vehicle battery, traction battery or the like. Furthermore, the present invention relates to a connector assembly and a charging robot comprising such an electrical connector.

### Background Art

In the field of electromobility, charging systems for batteries are required to operate with a high efficiency, while maintaining their functionality throughout the entire service life. Charging systems operating according to the inductive principle (i.e. energy transmission through electromagnetic induction between a source-side module and a load-side module) often exhibit high energetic losses and take up comparably large space. This is especially disadvantageous for large-scale charging systems e.g. of electric vehicle batteries and the like.

Charging systems, in which energy transmission takes place through an electric current directly flowing between a source-side conductor and a load-side conductor (i.e. conductive charging systems), require sufficient contacting forces between the respective conductors in order to achieve efficient energy transmission. This contacting force is typically exerted by spring-like electrical contact elements, which constitute the respective conductors. As a result, high mating forces are necessary during the mating process. Furthermore, the conductors' contact surfaces slide and scrape each other during the mating process, thus creating the risk of wear and damage to the contact surfaces, which are usually plated with an electrically conductive layer for reducing the electric contact resistance between the conductors. Damage to the contact surfaces causes the electric contact resistance to increase and the efficiency of the charging system to drop.

### Technical Problem to be Solved

The object of the present invention is to alleviate at least one of the above-mentioned difficulties and thus improve charging systems in terms of their mating process and/or longevity.

### Disclosure of Invention

The object is achieved by providing an electrical connector, such as an electrical connector for a conductive charging system of an electric vehicle battery, a traction battery or the like, with a transmission capacity of more than 15 kW, preferably 22 kW, configured to be mated with a mating connector along a mating direction and comprising at least two, preferably identical and rigid contact elements each with an electrically conductive contact surface, wherein each contact surface is at least partially inclined, preferably oblique, with respect to the mating direction and wherein the at least two contact elements are spaced apart from each other along a circumferential direction with respect to the mating direction. In particular, each contact surface may have at least one surface normal vector, which contains a first vector component pointing in the mating direction and a second vector component perpendicular to the mating direction.

This solution is advantageous, since the inclination of the contact surfaces may prevent a sliding of the contact surfaces on corresponding contact surfaces of the mating connector. In other words, the contact surfaces of the electrical connector may be electrically contacted with the corresponding contact surfaces of the mating connector purely by abutment. Thus, the amount of wear occurring during the mating process is reduced and the necessary mating force is lowered.

By providing at least two contact elements, which are separated from each other, the electrical connector may be used for conducting an alternating current, preferably an alternating current around 40 A such as between 10 A and 100 A. Furthermore, the at least two contact elements with their inclined contact surfaces may be configured to fulfill a self-centering function as will be described further below.

The above solution may be further improved by adding one or more of the following optional features. Each of the following optional features is advantageous on its own and may be combined independently with any other optional feature.

According to a first embodiment, each of the electrical connector may comprise three contact elements, e.g. for conducting a three-phase electric current. Further, the three contact elements may provide three points of mechanical abutment, which is advantageous for the electrical connector in terms of stability, as the three points of mechanical abutment precisely define a plane for a stable position (i.e. three-point stability).

Optionally and depending on the necessary electrical energy transmission, the electrical connector may also comprise a plurality of more than three contact elements, preferably arranged in a circular arrangement and with the same radius.

According to another embodiment, the at least two contact elements may be a solitary structure and at least one gap may be formed between the at least two contact elements. More precisely, the at least two contact elements may be a detached structure, freestanding, self-supporting and/or self-standing. If more than two contact elements are comprised by the electrical connector, all contact elements may form gaps pairwise. With the help of said gaps, the necessary clearance distances and creepage distances may be maintained.

According to another aspect of the invention, the electrical connector may comprise a base plate, preferably one of a circular, rectangular, oval and polygonal disc-shaped base plate, wherein the at least two contact elements may extend along the mating direction through the base plate. In particular, each contact element may penetrate the base plate and be rigidly held by the base plate. This is especially advantageous, since the base plate may serve as a means for attachment of the contact elements and thus prevents loss of the contact elements. The base-plate may be made of an electrically insulating material, preferably a resin, so as to function as electrical insulation between the at least two contact elements.

Alternatively, at least one of the at least two contact elements may be attached to the base plate via a joint, such as a knuckle joint, so as to be pivotable about a pivoting axis extending perpendicularly to the mating direction. This embodiment allows for misalignments between the contact surfaces of the at least two contact elements and the corresponding contact surfaces of the mating connector to be compensated within the range of motion of the joint, thus preventing wedging and bad contact.

Each contact element may comprise a contacting section and a terminal section, wherein the contacting section comprises the contact surface and protrudes from the base plate in the mating direction. The terminal section may penetrate the base plate against the mating direction, e.g. through a slit, which extends from an outer edge of the base plate towards an opposite edge of the base plate. The terminal section may serve for connecting an internal cable or wires of the electrical connector to the respective contact element, e.g. through clamping, welding, soldering, or comparable bonding methods. Additionally or alternatively, the terminal section may serve for attaching the respective contact element to the above-mentioned joint.

Furthermore, the electrical connector may comprise a connector housing made of an electrically insulating material, preferably a resin, wherein the connector housing may at least partially surround the at least two contact elements and/or the internal cable or wires of the electrical connector. The connector housing may be a connector casing or connector shell, fixedly attached to the base plate. In particular, a housing wall of the connector housing may extend along an outer circumference of the base plate and protrude along the mating direction. Thus, the connector housing may protect the electrical connector from external, chemical, mechanical or other harmful influences, such as water, dirt or dust.

Alternatively, the connector housing may be a connector casing or connector shell, spring-loaded and movably attached to the base plate. In this embodiment, the connector housing may be moved from a position, in which it protects the at least two contact elements during an unmated state, to a position in which it uncovers the at least two contact elements during a mated state. In other words, the connector housing may be retracted against the mating direction prior to or during the mating process.

Optionally, the base plate may comprise at least one socket, on which the at least two contact elements are attached. Preferably, the at least two contact elements are stiffly attached to the at least one socket and fixedly held in their respective inclined position. The at least one socket mechanically supports the respective contact element and thus increases the overall stability.

In yet another possible embodiment, each contact element may be positioned on a separate socket, preferably a solitary socket. This embodiment is advantageous, as it represents a material saving design of the electrical connector, resulting in less weight. More precisely, socket material is concentrated and limited only to where it is necessary for providing mechanical support to the respective contact element.

Each socket may protrude as a pedestal-like or pillar-like block from the base plate along the mating direction. Preferably, the socket may be monolithically formed by the base plate to reduce the number of components. Further, the at least two contact elements may be punched or stamped plate-like contact elements, which are bent around the respective socket, wherein the socket has an inclined mounting surface, which is parallel to the contact surface of the respective contact element and wherein the contact element at least partially covers the mounting surface. Thus, the mounting surface may provide a mechanical support for the respective contact element to abut against and bear on.

According to yet another embodiment, the contact surfaces of the at least two contact elements face one of outwards, preferably obliquely outwards, and inwards, preferably obliquely inwards, with respect to a center of the base plate, the center of the base plate being the centroid, the center of gravity or an intersection point of two or more symmetry axes of the base plate. Optionally, a center axis of the base plate, passing the center of the base plate, may extend parallel to the mating direction, and the contact surfaces of the at least two contact elements may face one of obliquely towards and obliquely away from the center axis. More precisely, the contact surfaces may have at least one surface normal vector, which contains a first vector component pointing in the mating direction and a second vector component pointing towards or away from the center and/or the center axis perpendicularly to the mating direction.

In this embodiment, the at least two contact elements may be arranged, in such a way, that the respective contact surfaces are part of a surface of a polyhedron, e.g. a truncated pyramid, or a body rotated around the center axis, e.g. a truncated cone, widening or tapering in the mating direction. For this, each contact surface may comprise at least one flat portion, which is tangential to a surface rotated around the center axis, such as a cone, a rotational paraboloid or a semi-sphere. Alternatively, each contact surface of the at least two contact elements may comprise at least one curved, preferably arced, portion, which is part of a surface rotated around the center axis, such as a cone, a rotational paraboloid or a semi-sphere. More precisely, the contact surfaces of the at least two contact elements may be distributed equigonally and/or equidistantly in a circular arrangement and may each extend along a segment of the base plate in a circumferential direction with respect to the center and/or center axis.

This configuration is advantageous for applications, in which the mating connector comprises complementarily configured contact surfaces (i.e. contact surfaces are part of a surface of a polyhedron, e.g. a truncated pyramid, or a body rotated around the center axis, e.g. a truncated cone, tapering or widening in the mating direction, respectively). The respective contact surfaces may be contacted purely by abutment, while also providing a self-centering function. In other words, the geometric arrangement of the contact surfaces may be utilized to convert a relative movement between the electrical connector and the mating connector from a translational movement in the mating direction into a translational movement perpendicular to the mating direction. This results in a translational movement directed towards the center axis. Thus, the alignment of the electrical connector and the mating connector, and especially the alignment of the corresponding contact surfaces may be facilitated.

Additionally or alternatively, in embodiments of the electrical connector comprising the connector housing, the self-centering function may be implemented by use of the housing wall. In particular, the housing wall may have a chamfered outer edge tapering in the mating direction. The mating connector may comprise a mating housing with a receptacle opening for receiving the electrical connector, wherein the receptacle opening is shaped complementarily to the connector housing, i.e. the receptacle opening has a chamfered inner edge widening in the mating direction. The above-explained conversion of relative movement may analogously take place with the help of said chamfered edges.

According to one possible embodiment, the shape of the housing wall and the receptacle opening may comprise a behavior-shaping feature for preventing a mating of the electrical connector with the mating connector in a false position. More precisely, the housing wall and the receptacle opening may form a key-lock-pair, which can be inserted into each other in a pre-defined discrete position only. This embodiment is especially advantageous in applications where the electrical connector and the mating connector are mated manually.

According to another aspect of the invention, the at least two contact elements have the same height with respect to the mating direction. In particular, the at least two contact elements are positioned at the same level with respect to the mating direction, thus allowing simultaneous abutment of the respective contact surfaces with the corresponding contact surfaces of the mating connector during the mating process.

According to yet another aspect of the invention, each contact surface of the at least two contact elements may have at least one convex protrusion, such as a knob or dimple. The at least one convex protrusion may be formed during the manufacturing of the contact element, e.g. by a pressing or forging process, and represents a means of defining the point of electrical contacting.

Optionally, each contact surface of the at least two contact elements may have a plurality of convex protrusions, and wherein all vertices of the plurality of convex protrusions are arranged on a surface of one of a common polyhedron and rotated body. Thus, a plurality of points for electrical contacting are defined, resulting in a larger cross-sectional area available for the electric current.

In another possible embodiment, the electrical connector may further comprise a part of a coupling, the coupling being one of a magnetic coupling and a mechanical coupling or a combination of both, as will be described below.

In particular, the electrical connector may comprise one of an effective part of a magnetic coupling, e.g. an electromagnet, and a passive part of the magnetic coupling, e.g. a mating ferromagnetic element, preferably attached concentrically to the center of the base plate, for attracting the mating connector. A magnetic force of the magnetic coupling may be utilized for creating the necessary contacting force between the corresponding contact elements of the electrical connector and the mating connector, while simultaneously aiding the alignment between the corresponding contact surfaces due to the predefined orientation of the occurring magnetic forces.

Additionally or alternatively, the electrical connector may comprise a mechanical locking device of a mechanical coupling, which is configured to engage in a mechanical interlocking connection with a complementary locking device of the mechanical coupling on the mating connector. This embodiment is advantageous for applications where additional contacting force is required or the specifications regarding weight and/or costs of the electrical connector do not allow the use of a magnetic coupling.

Furthermore, the electrical connector may comprise at least one, preferably spring-loaded, contact pin, which is movable, e.g. retractable against the mating direction, and has an electrically conductive end section facing in the mating direction. The at least one contact pin may be a pogo pin and serve as an auxiliary contact, which during the mating process abuts against the mating connector ahead of the contact surfaces of the at least two contact elements, thus signaling the proximity to the mating connector. By providing a spring-loaded contact pin, the spring-loaded contact pin may serve as a damper for absorbing any mechanical shocks, which otherwise would damage the at least two contact elements.

According to one embodiment, the electrical connector may comprise at least two contact pins, wherein at least one contact pin is connected to a neutral wire of the electrical connector and at least one other contact pin is connected to a ground wire of the electrical connector, thus serving as a neutral contact and a ground contact for the electrical connector respectively. In particular, the at least two contact pins may be are arranged within the circular space between the center of the base plate and a connecting circumference of the contact surfaces, i.e. a circular line, which passes the inner most or outer most points of each contact surface or any other distinct geometric point of each contact surface.

In embodiments comprising at least three contact elements and the magnetic coupling, the at least two contact pins may be arranged in the space between the magnetic coupling and the at least three contact elements. In this arrangement, the above-mentioned three-point stability is not influenced by the contact pins and is thus maintained.

Additionally or alternatively, the electrical connector may comprise at least one contact pad, which has an electrically conductive end face facing in the mating direction. The at least one contact pad may be positioned mirroredly with a corresponding contact pin of the mating connector and configured for an end section of the corresponding contact pin to abut against. In particular, the end face of the contact pad may be round or arc-shaped, especially arc-shaped and extending in the circumferential direction in order to bridge certain misalignment within the range of extension of the contact pad, such as a rotational misalignment in the circumferential direction with respect to the center axis.

Preferably, the electrical connector may comprise at least two contact pads, wherein at least one contact pad is connected to a neutral wire of the electrical connector and at least one other contact pad is connected to a ground wire of the electrical connector. This embodiment is advantageous for applications with strict specifications regarding the weight of the electrical connector, as contact pads usually weigh less than comparable contact pins, while analogously serving as the neutral contact and the ground contact for the electrical connector, respectively.

The object mentioned in the outset may also be achieved by a connector assembly comprising an electrical connector according to one of the above embodiments, in which the contact surfaces of the at least two contact elements face outwards and a mating connector according to one of the above embodiments, in which the contact surfaces of the at least two contact elements face inwards, and wherein all contact points between the contact surfaces of the electrical connector and contact surfaces of the mating connector are arranged on a surface of one of a polyhedron, e.g. a truncated pyramid, and a body rotated around the center axis, e.g. a truncated cone.

Such a connector assembly is advantageous, since the respective contact surfaces may be electrically contacted by abutment only and without relative sliding between the respective contact surfaces. This results in a lower mating force and less scraping on the respective contact surfaces, leading to a facilitated mating process and higher longevity of the charging system.

According to a possible embodiment of the above connector assembly, only one of the connectors may comprise convex protrusions on the respective contact surfaces, while the other has flat, even and/or plain contact surfaces. Thus, the points of electrical contacting are precisely defined.

According to another embodiment, the electrical connector may have one of the effective part of the magnetic coupling, e.g. an electromagnet, and the passive part of the magnetic coupling, e.g. a mating ferromagnetic element, while the mating connector has the respective other part. Consequently attraction between the electrical connector and the mating connector may be established.

Optionally, one of the connectors is a ground-side connector of a conductive charging system and the other connector is a vehicle-side connector of a conductive charging system. In this embodiment, the present invention may be utilized in a conductive charging system of an electric vehicle battery, a traction battery or the like.

The above object may also be achieved, by a charging robot comprising a robotic arm, such as a 3-, 4- or 5-axes robotic arm, and an electrical connector according to one of the above embodiments, wherein the electrical connector is a ground-side connector mounted on an end section of the robotic arm and the robotic arm is configured to automatically move and mate the electrical connector with a vehicle-side connector. Thus, the mating process may be further facilitated through automation. For this, the charging robot may further comprise sensors, preferably contactless sensors, such as cameras and/or distance sensors configured to provide a control system of the charging robot with measurement values in order to guide the movement of the robotic arm.

In the following, exemplary embodiments of the invention are described with reference to the drawings. The shown and described embodiments are for explanatory purposes only. The combination of features shown in the embodiments may be changed according to the foregoing description. For example, a feature which is not shown in an embodiment but described above, may be added if the technical effect associated with this feature is beneficial for a particular application. Vice versa, a feature shown as part of an embodiment may be omitted as described above, if the technical effect associated with this feature is not needed in a particular application.

In the drawings, elements that correspond to each other with respect to function and/or structure have been provided with the same reference numeral.

In the drawings,
- Fig. 1: shows a schematic rendition of a perspective view of an electrical connector according to one possible embodiment of the present disclosure;
- Fig. 2: shows a schematic rendition of a perspective view of an electrical connector according to another possible embodiment of the present disclosure;
- Fig. 3: shows a schematic rendition of a perspective view of the electrical connector according to the embodiment shown in Fig. 1 mated with a mating connector;
- Fig. 4: shows a schematic rendition of a side view of the electrical connector and the mating connector according to the embodiment shown in Fig. 3;
- Fig. 5: shows a schematic rendition of a perspective view of a connector assembly according to a possible embodiment of the present invention; and
- Fig. 6: shows a schematic rendition of a side view of an electrical connector according to another possible embodiment of the present disclosure.

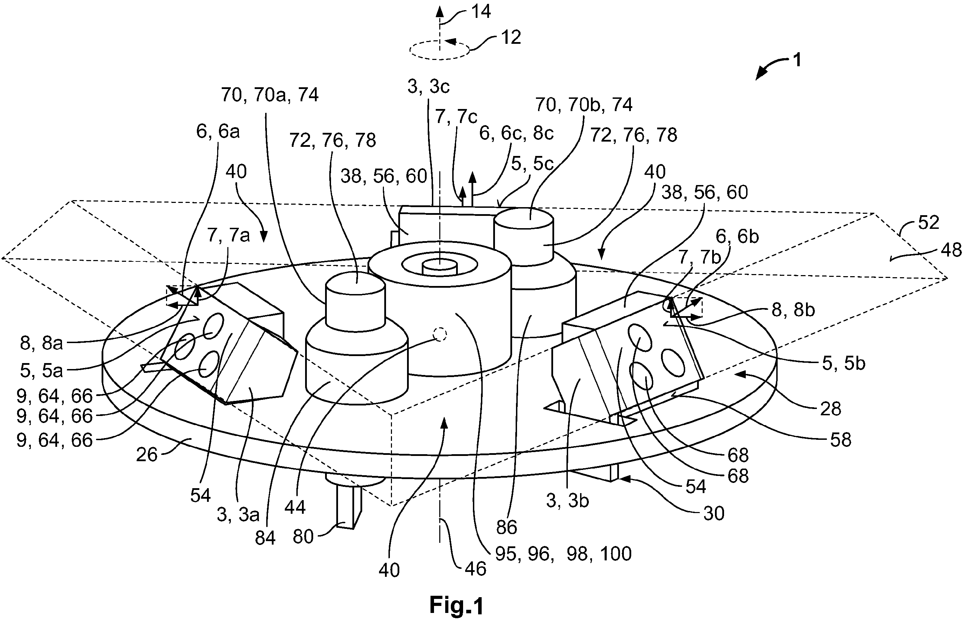

The structure of possible embodiments of an electrical connector 1 and a connector assembly 2 according to the present invention is explained with reference to the exemplary embodiments shown in Figs. 1 to 6.

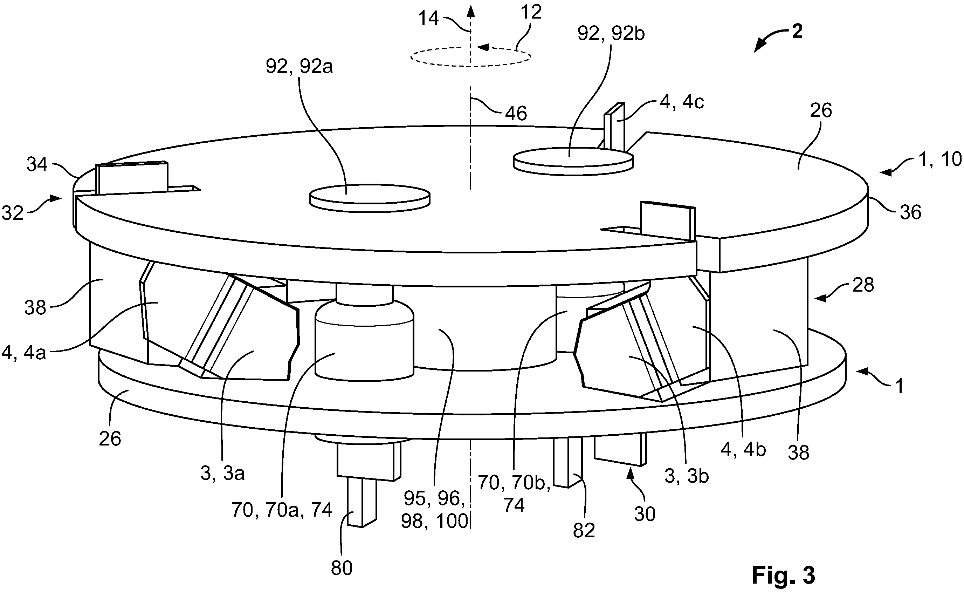

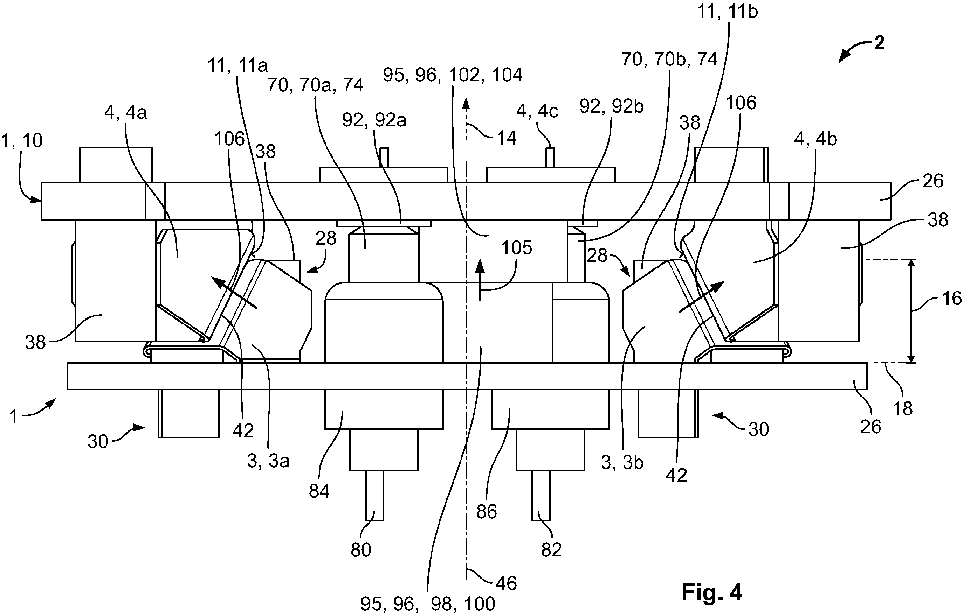

Fig. 1 shows a perspective view of the electrical connector 1 for a conductive charging system of an electric vehicle battery (not shown) according to one exemplary embodiment of the present invention. The electrical connector 1 may be configured to be mated with a mating connector 10 (see Fig. 3) along a mating direction 14. For this, the electrical connector 1 may comprise at least two, preferably identical and rigid, contact elements 3 each with an electrically conductive contact surface 5. According to the shown embodiment, the at least two contact elements 3 have the same height 16 and are positioned at the same level 18 (see Fig. 4) with respect to the mating direction 14.

Each contact surface 5 is at least partially inclined, preferably oblique, with respect to the mating direction 14. It can be seen that each contact surface 5 has at least one surface normal vector 6, which contains a first vector component 7 pointing in the mating direction 14 and a second vector component 8 perpendicular to the mating direction 14.

Furthermore, the electrical connector 1 may comprise a base plate 26. In the exemplary embodiment of Fig. 1, a circular, disc-shaped base plate 26 is shown. Alternatively, the base plate 26 may also have one of a rectangular, oval and polygonal shape.

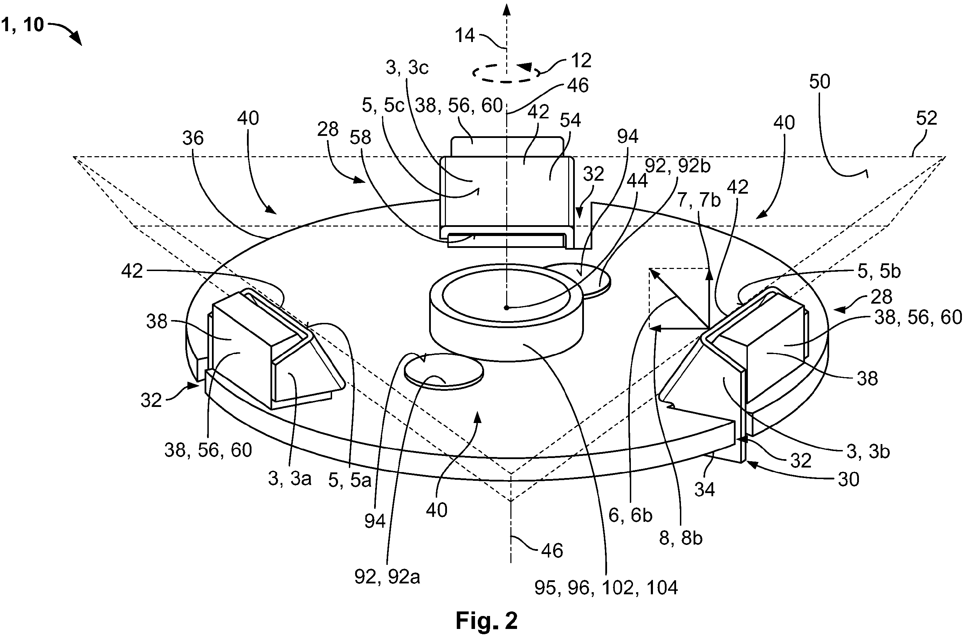

As shown in Figs. 1 and 2, the at least two contact elements 3 may extend along the mating direction 14 through the base plate 26, penetrate the base plate 26 and be rigidly held by the base plate 26. In particular, each contact element 3 may comprise a contacting section 28 and a terminal section 30, the contacting section 28 comprising the contact surface 5 and protruding from the base plate 26 in the mating direction 14. The terminal section 30 may penetrate the base plate 26 against the mating direction 14 through a slit 32 extending from an outer edge 34 of the base plate 26 towards an opposite edge 36 of the base plate 26.

The base plate 26 may comprise at least one socket 38, on which the at least two contact elements 3 are attached. Preferably, the at least two contact elements 3 are stiffly attached to the at least one socket 38, thereby being fixedly held in their respective inclined position.

In the shown embodiments of Figs. 1 and 2, the electrical connector 1 comprises three contact elements 3a, 3b, 3c, which are spaced apart from each other along a circumferential direction 12 with respect to the mating direction 14. The three contact elements 3a, 3b, 3c may be solitary, preferably freestanding, and may, pairwise, form gaps 40. Further, the three contact elements 3a, 3b, 3c may provide three points of mechanical abutment 42 for corresponding contact elements 4, 4a, 4b, 4c (see Fig. 3) of the mating connector 10.

In Fig. 1, the contact surfaces 5a, 5b, 5c of the three contact elements 3a, 3b, 3c face obliquely outwards with respect to a center 44 of the base plate 26, wherein the center 44 of the base plate 26 is the center of gravity of the base plate 26. The three contact elements 3a, 3b, 3c may further face away from a center axis 46 of the base plate 26, passing the center 44 of the base plate 26 and extending parallel to the mating direction. In sum, the contact surfaces 5a, 5b, 5c may each have at least one surface normal vector 6a, 6b, 6c, which contains a first vector component 7a, 7b, 7c pointing in the mating direction 14 and a second vector component 8a, 8b, 8c perpendicularly to the mating direction 14 and pointing away from the center 44 and/or the center axis 46.

In particular, the contact surfaces 5a, 5b, 5c may be part of an outer surface 48 of a truncated triangular pyramid 52 tapering in the mating direction 14. For this, each contact surface 5a, 5b, 5c may comprise at least one flat portion 54 as shown in Fig. 1. Alternatively, each contact surface 5 a, 5b, 5c may comprise at least one curved, preferably arced, portion, which is part of a surface rotated around the center axis 46, such as a cone, a rotational paraboloid or a semi-sphere. Furthermore, the contact surfaces 5a, 5b, 5c may be distributed equigonally and equidistantly in a circular arrangement and may each extend along a segment of the base plate 26 in a circumferential direction 12 with respect to the center 44 and/or center axis 46.

It is to be understood that the electrical connector 1 may also comprise a plurality of more than three contact elements 3 depending on the necessary electrical energy transmission. In this case, the plurality of contact elements 3 may be arranged in a circular arrangement around the center 44 of the base plate 26 and with the same radius. Further, the contact surfaces 5 may be arranged as part of a surface of any kind of polyhedron widening or tapering in the mating direction 14, or, alternatively, as part of a surface of any kind of body rotated around the center axis 46 of the base plate 26 widening or tapering in the mating direction 14.

In Fig. 2, the contact surfaces 5a, 5b, 5c of the three contact elements 3a, 3b, 3c face obliquely inwards with respect to the center 44. Consequently, the contact surfaces 5a, 5b, 5c may be part of an inner surface 50 of a truncated triangular pyramid 52 widening in the mating direction 14.

Further, in the shown embodiments of Figs. 1 and 2, each contact element 3a, 3b, 3c is positioned on a separate, solitary socket 38 protruding along the mating direction 14. Each socket 38 may be monolithically formed by the base plate 26 as a pedestal-like block 56 with a mounting surface 58, wherein the mounting surface 58 is inclined with respect to the mating direction 14.

The contact elements 3a, 3b, 3c may be plate-like contact elements 3, which are bent around the respective socket 38 and at least partially cover the mounting surface 58. Preferably, the contact elements 3a, 3b, 3c are bent in such a way that each contact surface 5a, 5b, 5c is parallel to the respective mounting surface 58. Thereby, the mounting surface 58 may provide mechanical support 60 for the respective contact element 3a, 3b, 3c to abut against and bear on.

Referring again to Fig. 1, each contact surface 5a, 5b, 5c may have at least one convex protrusion 9, such as a knob 64 or a dimple 66. In the shown embodiment of Fig. 1, each contact surface 5a, 5b, 5c has three convex protrusions 9. Depending on the necessary current carrying capacity, each contact surface 5a, 5b, 5c may also have a plurality of more than three convex protrusions 9. Preferably, all vertices 68 of the plurality of convex protrusions 9 are arranged on a surface of one of a common polyhedron and rotated body.

Furthermore, the electrical connector 1 may comprise at least one, preferably spring-loaded, contact pin 70, which is movable, e.g. retractable against the mating direction 14, and has an electrically conductive end section 72 facing in the mating direction 14. Preferably, the at least one contact pin is a pogo pin 74, which has a tip 76 with a curved surface 78 facing in the mating direction 14.

In the shown embodiment of Fig. 1, the electrical connector 1 may comprise at least two contact pins 70a, 70b, wherein at least one contact pin 70a is connected to a neutral wire 80 (see Fig. 4) of the electrical connector 1 and at least one other contact pin 70b is connected to a ground wire 82 (see Fig. 4) of the electrical connector 1, thus serving as a neutral contact 84 and a ground contact 86 for the electrical connector 1, respectively.

Additionally or alternatively, the electrical connector 1 may comprise at least one contact pad 92, which has an electrically conductive, round end face 94 facing in the mating direction 14. The embodiment shown in Fig. 2 comprises two such contact pads 92a, 92b, wherein at least one contact pad 92a is connected to a neutral wire (not shown) of the electrical connector 1 and at least one other contact pad 92b is connected to a ground wire (not shown) of the electrical connector 1.

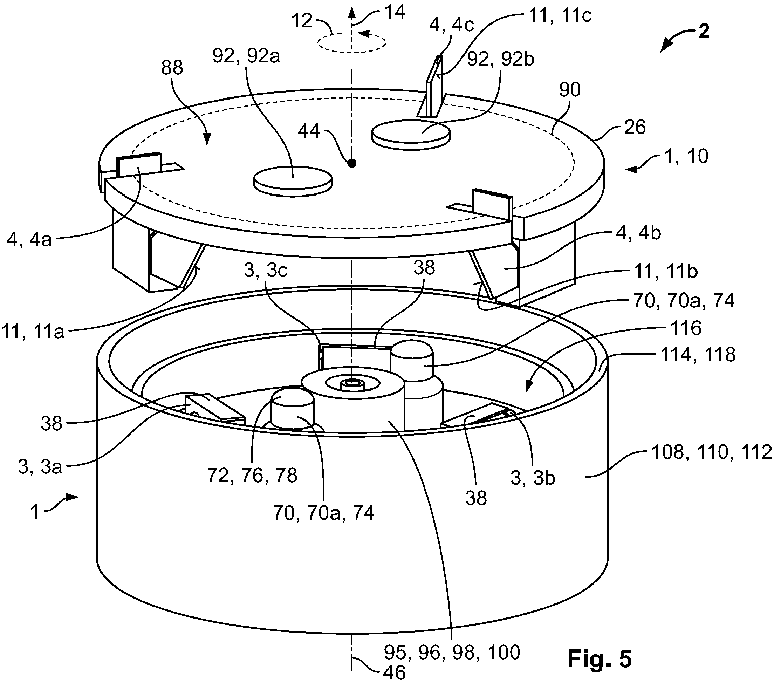

Each contact pin 70a, 70b may mirror in terms of position and size a corresponding contact pad 92a, 92b of the mating connector 10. This is shown in Fig. 5. As can also be seen in Fig. 5, the contact pins 70 and/or the contact pads 92 may be are arranged within a circular space 88 between the center 44 of the base plate 26 and a connecting circumference 90 of the contact elements 3a, 3b, 3c and/or the corresponding contact elements 4a, 4b, 4c.

Further referring to Fig. 1, the electrical connector 1 may comprise a part of a coupling 95, such as an effective part 98 of a magnetic coupling 96, e.g. an electromagnet 100, preferably attached concentrically to the center 44 of the base plate 26, for attracting the mating connector 10, as is shown in Figs. 3 and 4. In this case, the mating connector 10 may be constituted by an electrical connector 1 according to the embodiment shown in Fig. 2. Especially, the mating connector 10 may comprise a passive part 102 of the magnetic coupling 96, such as a mating ferromagnetic element 104. Thereby, a magnetic force 105 of the magnetic coupling 96 may be utilized for creating a contacting force 106 between the contact elements 3a, 3b, 3c of the electrical connector 1 and the corresponding contact elements 4a, 4b, 4c of the mating connector 10.

Additionally or alternatively, the electrical connector 1 may comprise a mechanical locking device (not shown) of a mechanical coupling (not shown), while the mating connector 10 may comprise a complementary locking device of the mechanical coupling (not shown).

In Figs. 3 and 4, the connector assembly 2 is shown, comprising an electrical connector 1 according to the embodiment of Fig. 1 and a mating connector 10 according to the embodiment of Fig. 2. As can be seen, the contact surfaces 5a, 5b, 5c of the electrical connector 1 face outwards with respect to the center axis 46, while the corresponding contact surfaces 11, 11a, 11b, 11c of the mating connector 10 face inwards with respect to the center axis 46. Consequently, all contact points between the contact surfaces 5a, 5b, 5c of the electrical connector 1 and the corresponding contact surfaces 11a, 11b, 11c of the mating connector 10 are arranged on opposite surfaces 48, 50 of the same truncated triangular pyramid 52 (see Fig. 1 and 2).

Fig. 5 shows another possible embodiment of the connector assembly 2, wherein the electric connector 1 further comprises a connector housing 108. The connector housing 108 at least partially surrounds the three contact elements 3a, 3b, 3c of the electrical connector 1. In particular, the connector housing 108 may be a connector casing 110 or connector shell 112, fixedly attached to the base plate 26. In the shown embodiment of Fig 5, a housing wall 114 of the connector housing 108 extends along an outer circumference 116 of the base plate 26 and protrude along the mating direction 14 in the shape of a hollow cylinder 118.

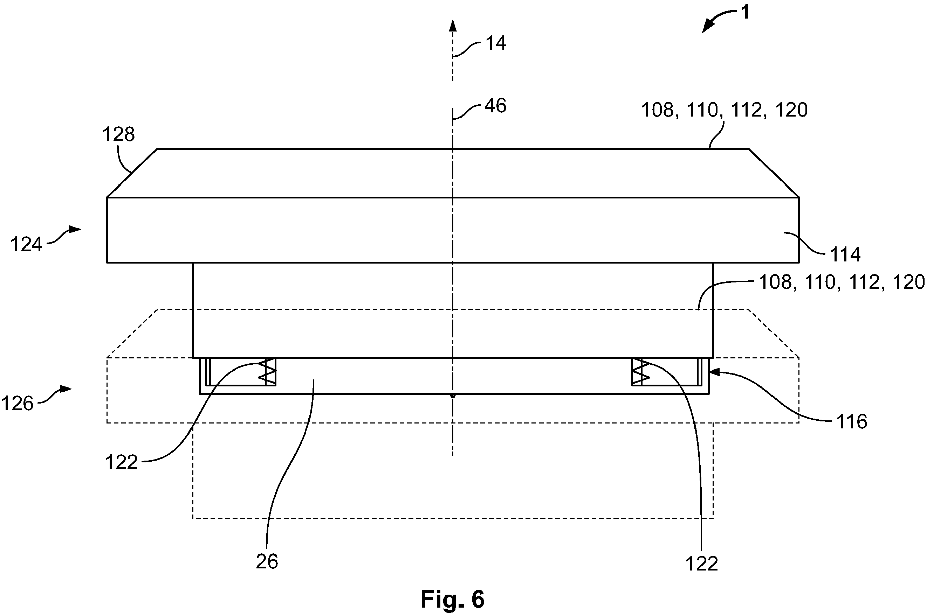

Alternatively, the connector housing 108 may be spring-loaded and movably attached to the base plate 26. In Fig. 6, a possible embodiment of the electrical connector 1 is shown with such a spring-loaded connector housing 120. As can be seen, the connector housing 108 is attached via springs 122 to the base plate 26. Thereby, the spring-loaded connector housing 120 may be moved from a position 124, in which it protects the three contact elements 3a, 3b, 3c during an unmated state, to a position 126 in which it uncovers the three contact elements 3a, 3b, 3c during a mated state (shown as a dotted line). In sum, the connector housing 108, 120 may be retracted against the mating direction 14 prior to or during the mating process.

As can further be seen in Fig. 5, the housing wall 114 may have a chamfered outer edge 128 tapering in the mating direction 14. The mating connector may comprise a mating housing (not shown) with a receptacle opening (not shown) having a chamfered inner edge (not shown) configured to function as a centering aid jointly with the chamfered outer edge 128 during the mating process.

### REFERENCE NUMERALS

- 1: electrical connector
- 2: connector assembly
- 3, 3a, 3b, 3c: contact element
- 4, 4a, 4b, 4c: corresponding contact element
- 5, 5a, 5b, 5c: contact surface
- 6, 6a, 6b, 6c: surface normal vector
- 7, 7a, 7b, 7c: first vector component
- 8, 8a, 8b, 8c: second vector component
- 9: convex protrusion
- 10: mating connector
- 11, 11a, 11b, 11c: corresponding contact surface
- 12: circumferential direction
- 14: mating direction
- 16: height
- 18: level
- 26: base plate
- 28: contacting section
- 30: terminal section
- 32: slit
- 34: outer edge
- 36: opposite edge
- 38: socket
- 40: gap
- 42: point of mechanical abutment
- 44: center
- 46: center axis
- 48: outer surface
- 50: inner surface
- 52: truncated triangular pyramid
- 54: flat portion
- 56: pedestal-like block
- 58: mounting surface
- 60: mechanical support
- 64: knob
- 66: dimple
- 68: vertex
- 70, 70a, 70b: contact pin
- 72: end section
- 74: pogo pin
- 76: tip
- 78: curved surface
- 80: neutral wire
- 82: ground wire
- 84: neutral contact
- 86: ground contact
- 88: circular space
- 90: connecting circumference
- 92, 92a, 92b: contact pad
- 94: end face
- 95: coupling
- 96: magnetic coupling
- 98: effective part
- 100: electromagnet
- 102: passive part
- 104: mating ferromagnetic element
- 105: magnetic force
- 106: contacting force
- 108: connector housing
- 110: connector casing
- 112: connector shell
- 114: housing wall
- 116: outer circumference
- 118: hollow cylinder
- 120: spring-loaded connector housing
- 122: spring
- 124: position
- 126: position
- 128: chamfered outer edge

## Claims

1. An electrical connector (1) configured to be mated with a mating connector (10) along a mating direction (14) and comprising at least two contact elements (3) each with a contact surface (5), wherein each contact surface (5) is at least partially inclined with respect to the mating direction (14) and wherein the at least two contact elements (3) are spaced apart from each other along a circumferential direction (12) with respect to the mating direction (14).

2. An electrical connector (1) according to claim 1, wherein the at least two contact elements (3) are solitary and at least one gap (40) is formed between the at least two contact elements (3).

3. An electrical connector (1) according to claim 1 or 2, wherein the electrical connector (1) comprises a base plate (26), and wherein the at least two contact elements (3) extend along the mating direction (14) through the base plate (26).

4. An electrical connector (1) according to claim 3, wherein the base plate (26) comprises at least one socket (38), on which the at least two contact elements (3) are attached.

5. An electrical connector (1) according to claim 4, wherein each contact element (3) is positioned on a separate socket (38).

6. An electrical connector (1) according to any one of claims 3 to 5, wherein the contact surfaces (5) of the at least two contact elements (3) face one of outwards and inwards with respect to a center (44) of the base plate (26).

7. An electrical connector (1) according to any one of claims 1 to 6, wherein the at least two contact elements (3) have the same height (16) with respect to the mating direction (14).

8. An electrical connector (1) according to any one of claims 1 to 7, wherein each contact surface (5) of the at least two contact elements (3) has at least one convex protrusion (9).

9. An electrical connector (1) according to any one of claims 1 to 8, wherein each contact surface (5) of the at least two contact elements (3) has a plurality of convex protrusions (9), and wherein all vertices (68) of the plurality of convex protrusions (9) are arranged on a surface of one of a polyhedron and rotated body.

10. An electrical connector (1) according to any one of claims 1 to 9, wherein the electrical connector (1) further comprises a part (98, 102) of a coupling (95), the coupling (95) being one of a magnetic coupling (96) and a mechanical coupling.

11. An electrical connector (1) according to any one of claims 1 to 10, wherein the electrical connector (1) further comprises at least one contact pin (70), which is movable along the mating direction (14) and has an end section (72) facing in the mating direction (14).

12. An electrical connector (1) according to any one of claims 1 to 11, wherein the electrical connector (1) further comprises at least one contact pad (92), which has an end face (94) facing in the mating direction (14).

13. A connector assembly (2) comprising an electrical connector (1) according to any one of claims 1 to 12 in which the contact surfaces (5) of the at least two contact elements (3) face outwards and a mating connector (10) according to any one of claims 1 to 12 in which the contact surfaces (11) of the at least two contact elements (4) face inwards, and wherein all contact points between the contact surfaces (5) of the electrical connector (1) and the contact surfaces (11) of the mating connector (10) are arranged on a surface of one of a polyhedron and a rotated body.

14. A connector assembly (2) according to claim 13, wherein one of the connectors (1, 10) is a ground-side connector of a conductive charging system and the other connector (1, 10) is a vehicle-side connector of a conductive charging system.

15. A charging robot comprising a robotic arm and an electrical connector (1) according to any one of claims 1 to 12, wherein the electrical connector (1) is mounted on an end section of the robotic arm.
